# EUROPÄISCHE PATENTSCHRIFT

(11) **EP 0 563 564 B1**
(45) Veröffentlichungstag und Bekanntmachung des Hinweises auf die Patenterteilung: **25.06.1997**
(21) Anmeldenummer: 93102730.4
(22) Anmeldetag: 21.02.1993
(51) Int. Cl.: B02C 4/30

(54) **Gutbettwalzenmühle**
Roller mill producing a bed of material
Broyeur à lit

(30) Priorität: 30.03.1992 DE 4210395
(43) Veröffentlichungstag der Anmeldung: 06.10.1993
(73) Patentinhaber: KRUPP POLYSIUS AG, 59269 Beckum (DE)
(72) Erfinder: Kästingschäfer, Gerhard, Dipl.-Ing., W-4727 Wadersloh (DE); Peterwerth, Bernhard, Dipl.-Ing., W-4518 Bad Laer (DE); Schröder, Heinz, Dipl.-Ing., W-4720 Beckum (DE)
(74) Vertreter: Tetzner, Volkmar, Dr.-Ing. Dr. jur.

(56) Entgegenhaltungen:
- EP-A- 0 271 336
- EP-A- 0 418 497
- DE-A- 3 915 320
- DE-A- 4 017 183
- US-A- 3 339 055

## Beschreibung

Die Erfindung betrifft eine Gutbettwalzenmühle zur Zerkleinerung von sprödem Mahlgut, entsprechend dem Oberbegriff des Anspruches 1.

Eine Walzenmühle der vorausgesetzten Art laßt sich etwa der DE-A-39 15 320 entnehmen. In diesem Falle enthält jede Mahlwalze einen Walzengrundkörper und einen aus einer Anzahl von Einzelsegmenten zusammengesetzten, mit dem Walzengrundkörper verspannten Segmente. Diese Segmente des Walzenmantels bestehen im wesentlichen aus einem harten Gußwerkstoff und darin eingegossenen, quer verlaufenden Blechen aus einem weicheren Material. Da sich diese eingegossenen Bleche bereits nach sehr kurzem Mahlbetrieb etwas mehr abnutzen als das Hartgußmaterial des Walzenmantels ergeben sich an der Oberfläche dieses Walzenmantels entsprechende Rillen, die zu einer Oberflächenprofilierung führen.

Durch das Vorsehen einer Oberflächenprofilierung auf dem Walzenmantel soll im Betrieb der Walzenmühle vermieden werden, daß zwischen der Walzenoberfläche beider Walzen und dem zugeführten Mahlgut eine unerwünschte Relativbewegung, d.h. ein Schlupf, ein Gleiten oder Fließen entsteht.

Der Erfindung liegt die Aufgabe zugrunde, eine Gutbettwalzenmühle der im Oberbegriff des Anspruches 1 vorausgesetzten Art in der Weise zu verbessern, daß ihre Walzen bei relativ einfacher Fertigung ein besonders gutes Einzugsverhalten für das zu zerkleinernde Mahlgut und gleichzeitig eine besonders verschleißfeste Manteloberfläche besitzen.

Diese Aufgabe wird erfindungsgemäß durch das Kennzeichen des Anspruches 1 gelöst.

Vorteilhafte Ausgestaltungen der Erfindung sind Gegenstand der Unteransprüche.

Aus der EP-A-0 418 497 ist eine Walzenmühle zur Zerkleinerung von sprödem Mahlgut bekannt, bei der wenigstens die äußere Schicht der Panzerung aus Schweißraupen besteht, die horizontal längs Walzenmantellinien nebeneinander aufgeschweißt sind.

Auch aus der EP-A-0 271 336 ist zu entnehmen, auf dem Walzenmantel Schweißraupen aufzubringen.

In der US-A-3 339 055 wird ein Verfahren beschrieben, bei dem auf dem Walzenmantel Schweißraupen aufgebracht werden, die horizontal längs der Walzenmantellinien nebeneinander angeordnet sind.

Es ist zwar bereits bekannt, die verschleißfeste Oberfläche eines Walzenmantels dadurch zu bilden, daß im Auftragsschweißverfahren radial von innen nach außen gesehen mehrmals abwechselnd duktile metallische Pufferschichten und harte Panzerschichten übereinander geschweißt werden (vgl. DE-C-38 43 173). Der Dicke dieser Panzerschichten sind jedoch Grenzen gesetzt.

Die vorliegende Erfindung geht nun einen ganz anderen Weg, indem sie bei dieser Walzenmühle Mahlwalzen verwendet, deren Walzenmantel auf relativ einfache Weise aus verschleißfestem Hartguß hergestellt ist. Erfindungsgemäß sind nun auf die Oberfläche dieses Hartguß-Walzenmantels Profilierungen in Form von Schweißraupen aus verschleißfestem Auftragsschweißwerkstoff aufgebracht. Bei dieser Ausbildung des Hartguß-Walzenmantels und insbesondere von dessen Oberfläche mußte zunächst ein zumindest bei den erwähnten Gutbett-Walzenmühlen bestehendes Vorurteil überwunden werden, da Hartguß mit den bekannten Schweißverfahren nicht einwandfrei schweißbar ist. Bei den der Erfindung zugrundeliegenden Versuchen hat sich jedoch gezeigt, daß beim Aufbringen der Schweißraupen aus dem verschleißfesten Auftragsschweißwerkstoff auf die Oberfläche des Hartguß-Walzenmantels in den Schweißraupen selbst kleinere Querrisse entstanden, die zum Teil sogar etwas in den Grundwerkstoff des Walzenmantels verliefen, und daß außerdem parallel zu den Schweißraupen teilweise regellose kleinere Risse in der Oberfläche des Walzenmantels entstanden. Entgegen den bisherigen Annahmen, daß solche Risse die Stabilität und Haltbarkeit des Walzenmantels beeinträchtigen würden, hat sich jedoch über einen längeren Versuchszeitraum gezeigt, daß die genannten Risse die Haltbarkeit des Hartguß-Walzenmantels offensichtlich nicht beeinträchtigen. Ein besonders hervorzuhebender Vorteil ist jedoch, daß diese aus verschleißfestem Auftragsschweißwerkstoff hergestellten Schweißraupen-Profilierungen einen besonders großen Widerstand gegen Verschleiß, und zwar einen noch höheren Verschleißwiderstand als der Hartguß des Walzenmantels zeigte.

Dieses erfindungsgemäße Aufbringen von Schweißraupen als Profilierungen auf den Oberflächen der Hartguß-Walzenmäntel läßt sich mit relativ geringen Kosten und durch sehr einfache Schweißapparate kurzfristig auftragen, wodurch relativ niedrige Verschleißkosten und eine kurzfristig mögliche Regenierung eventuell verschlissener Schweißraupen gewährleistet werden kann. Ein besonders vorteilhaft anzuwendendes Schweißverfahren zum Auftragen dieser Schweißraupen ist das Schweißen mit selbstschützenden Fülldrähten.

Ein weiterer Vorteil dieser erfindungsgemäßen Ausführung ist auch darin zu sehen, daß im Gegensatz zu auftragsgeschweißten Verschleißoberflächen mit abwechselnden duktilen Pufferschichten und harten Panzerschichten die Walzenmäntel von erfindungsgemäß hergestellten Mahlwalzen eine besonders große Gesamtverschleißdicke (von bis zu über 100 mm) aufweisen können, wodurch eine hohe Verschleißschutz-Standzeit der so hergestellten Mahlwalzen erreicht wird.

Weiterhin ist es hierbei vorteilhaft, daß durch die große Druckfestigkeit von Hartguß höhere Mahldrücke als bei auftragsgeschweißten Walzenmänteln zulässig sind, wodurch bei der erfindungsgemäßen Walzenmühle - im Vergleich zu den bekannten Ausführungen - bei gleicher Mahlgut-Aufgabemenge mit einer deutlich reduzierten Umfangsgeschwindigkeit und einer größeren Schülpendicke (Agglomeratsdicke) gearbeitet werden kann.

Die Erfindung sei nachfolgend anhand der Zeichnung näher beschrieben. In dieser weitgehend schematisch gehaltenen Zeichnung zeigen
- Fig.1: eine Stirnansicht der Walzenmühle (insbesondere der beiden Walzen);
- Fig.2: eine Aufsicht auf eine Teil-Oberfläche eines Walzenmantels mit rautenförmiger Schweißraupen-Profilierung;
- Fig.3: eine Aufsicht auf eine Teiloberfläche eines Walzenmantels mit chevronförmigen Schweißraupen-Profilierungen.

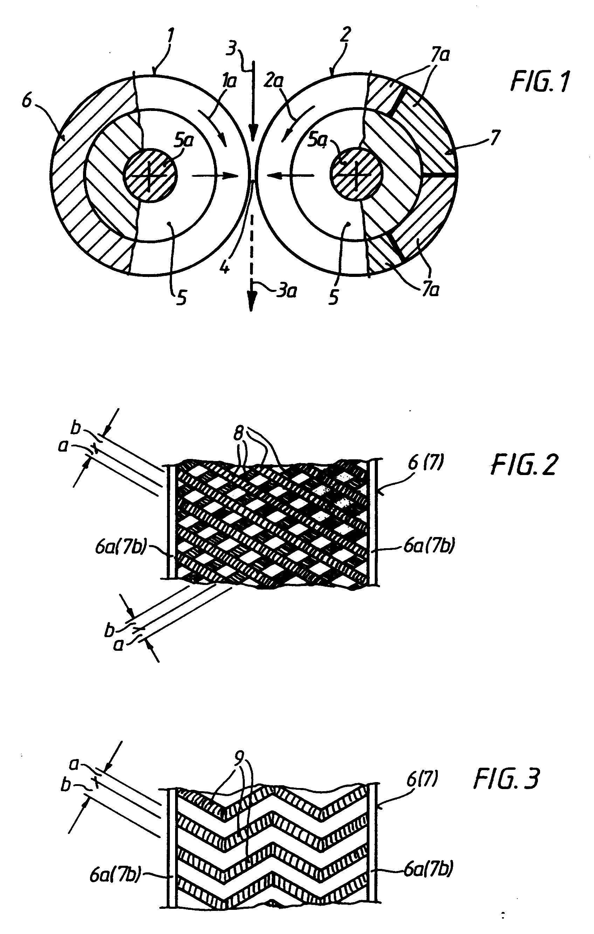

Von der ganzen Walzenmühle sind in Fig.1 der Einfachheit und Übersichtlichkeit halber nur die beiden Walzen 1 und 2 veranschaulicht. Bei dieser Walzenmühle handelt es sich vorzugsweise um eine sogenannte Gutbett-Walzenmühle, in der sprödes Mahlgut, zum Beispiel Mineralien und Erze, zwischen den beiden mit hohem Druck gegeneinander gepreßten Mahlwalzen 1, 2 zerkleinert wird. Diese beiden Mahlwalzen werden so angetrieben, daß sie - entsprechend den Pfeilen 1a und 2a - gegensinnig zueinander umlaufen. Das zu zerkleinernde Mahlgut wird entsprechend dem durchgehenden Pfeil 3 dem zwischen den beiden Mahlwalzen 1, 2 vorhandenen Mahlspalt 4 von oben her zugeführt, so daß es dann in an sich bekannter Weise einer Gutbettzerkleinerung unterworfen und in Form von Schülpen oder Agglomeraten (gestrichelter Pfeil 3a) nach unten austritt.

Jede Mahlwalze 1, 2 enthält einen Walzengrundkörper 5, der jeweils gleichartig aufgebaut sein kann und zumindest an seinen Enden Achsen bzw. Achsstummel 5a für Lagerung und Antrieb der Walzen aufweist.

Auf jedem Walzengrundkörper 5 ist ein Walzenmantel 6 bzw. 7 vorgesehen. Jeder Walzenmantel besteht im wesentlichen aus verschleißfestem Hartguß und kann in jeder geeigneten Weise ausgebildet und auf dem zugehörigen Walzengrundkörper 5 befestigt sein. Bei der - in Fig.1 linken - Mahlwalze 1 sei angenommen, daß es sich um eine Verbundguß-Vollwalze handelt, sie also einen in Umfangsrichtung durchgehenden und fest auf den Walzengrundkörper 5 aufgegossenen Hartguß-Walzenmantel 6 aufweist. In ähnlicher Weise könnte der Hartguß-Walzenmantel auch als Verbundgußbandage auf dem Grundkörper 5 vorgesehen sein.

Im Falle der - in Fig.1 rechten - anderen Mahlwalze 2 sei angenommen, daß der Hartguß-Walzenmantel 7 aus einzelnen gleich großen Segmenten 7a zusammengesetzt ist, die auf dem Walzengrundkörper 5 in an sich bekannter Weise (beispielsweise mit Hilfe entsprechender Klammern und Schrauben) lösbar und auswechselbar befestigt sind.

Von besonderer Bedeutung ist nun, daß jeder Hartguß-Walzenmantel 6, 7, egal wie er im einzelnen hergestellt und auf dem Walzengrundkörper 5 befestigt ist, auf seiner äußeren Oberfläche (Mantelfläche) Profilierungen in Form von Schweißraupen aus verschleißfestem Auftragsschweißwerkstoff aufweist.

Gemäß dem in Fig.2 dargestellten Ausschnitt einer Teil-Oberfläche eines Walzenmantels (6 oder 7) können diese Profilierungs-Schweißraupen 8 in Form eines Rautenmusters auf der Oberfläche des Walzenmantels 6 bzw. 7 angebracht bzw. aufgeschweißt sein.

Gemäß dem Beispiel in Fig.3 können die Profilierungs-Schweißraupen 9 auch in Form eines Chevron-Musters auf der Oberfläche des Walzenmantels 6 bzw. 7 angebracht bzw. aufgeschweißt sein.

Es versteht sich von selbst, daß auch ähnliche andere zweckmäßige Profilierungsmuster vorgesehen sein können.

Bei beiden Ausführungen (Fig.2 und 3) wird es vorgezogen, die Hartguß-Walzenmäntel 6, 7 so auszubilden, daß sie von Profilierungs-Schweißraupen 8 bzw. 9 freie axiale Endabschnitte 6a bzw. 7b aufweisen. Dieser Kantenabstand der Schweißraupen 8 bzw. 9 zu den Stirnflächen der Walzen dient gewissermaßen als Sicherheitsabstand, um die Festigkeit der Walzenmäntel 6, 7 in keiner Weise zu gefährden; die axiale Breite dieser Endabschnitte kann - je nach Walzenabmessungen - etwa im Bereich von ca. 15 bis 25 mm, vorzugsweise etwa im Bereich von 20 mm liegen.

Unabhängig von der Zusammenordnung der Schweißraupen 8, 9 bzw. des gewählten Profilierungsmusters besitzen die Schweißraupen 8 bzw. 9 - jeweils in Abhängigkeit von den Walzenabmessungen bzw. dem zu zerkleinernden Gut - eine Breite (a) von ca. 10 bis 20 mm, vorzugsweise etwa im Bereich von ca. 15 mm, und eine Höhe (oberhalb der Oberfläche des zugehörigen Walzenmantels) von etwa 2 bis 5 mm, vorzugsweise etwa im Bereich von ca. 3 mm.

Diese Profilierungs-Schweißraupen 8 bzw. 9 können vorzugsweise mit einem lichten Abstand b von wenigstens etwa 10 mm auf der Oberfläche des zugehörigen Walzenmantels 6, 7 vorgesehen sein. Für viele spröde Mahlgüter, insbesondere bei stark schleißenden Mahlgütern, erweist es sich als vorteilhaft, die Profilierungs-Schweißraupen 8, 9 auf der Oberfläche jedes Walzenmantels 6 bzw. 7 mit einem lichten Abstand b aufzuschweißen, der etwa der Breite dieser Schweißraupen 8, 9 entspricht.

Durch die erläuterten Profilierungsmuster der Schweißraupen 8 bzw. 9 (Fig.2 und 3) kann ferner auch in vorteilhafter Weise erreicht werden, daß sich die zwischen den schweißraupenabschnitten gebildeten Restflächen der Walzenmantel-Oberfläche bzw. der sich durch die Profilierungen ergebenden Vertiefungen mit zu zerkleinerndem Mahlgut ausfüllen, so daß zusätzlich ein autogener Verschleißschutz der nicht mit Schweißraupen 8, 9 versehenen Oberfläche der Walzenmäntel 6, 7 gebildet wird.

In jedem Falle kann durch die Wahl und Ausbildung der Profilierungs-Schweißraupen 8 bzw. 9 ein gegenüber bekannten Ausführungen stark verbessertes Einzugsverhalten des zu zerkleinernden Mahlgutes in den Mahlspalt 4 bei erhöhtem Mahlgutdurchsatz erreicht werden. Hinzu kommt noch der bereits eingangs erwähnte besonders gute Verschleißschutz der Oberfläche dieser Walzenmäntel 6, 7 sowie ein höherer zulässiger Mahldruck seitens der Mahlwalzen 1, 2, da durch die erhöhte Reibung bzw. das verbesserte Einzugsverhalten die Gefahr einer Mahlgutextrusion im Mahlspalt 4 auf ein Minimum herabgesetzt ist.

Nachfolgend seien noch einige bevorzugte Ausführungsbeispiele für die zu verwendenden Werkstoffe sowohl für den Hartguß-Walzenmantel 6, 7 jeder Mahlwalze 1, 2 als auch für die Profilierungs-Schweißraupen 8 bzw. 9 angegeben:

Der Grundwerkstoff für den Hartguß-Walzenmantel 6, 7 kann ein legierter Nickel-Chrom-Hartguß mit wenigstens ca. 2,6 bis 3,2 % Kohlenstoff (C), 1,8 bis 2,0 % Silizium (Si), 0,4 bis 0,6 % Mangan (Mn), 5,0 bis 6,5 % Nickel (Ni), 8,0 bis 9,0 % Chrom (Cr) oder ein legierter Chrom-Molybdän-Hartguß mit wenigstens ca. 2,5 bis 3,2 % Kohlenstoff, 0,5 bis 1,2 % Silizium, 0,6 bis 1,4 % Mangan, 1,0 bis 1,5 % Nickel, 16,0 bis 20,0 % Chrom und 2,5 bis 3 % Molybdän (Mo) sein.

Der Auftragsschweißwerkstoff der Profilierungs-Schweißraupen 8, 9 kann eine kohlenstoff- und chromreiche Eisen-Basislegierung mit wenigstens ca. 5,0 % Kohlenstoff, 3,0 % Mangan, 1,8 % Silizium und 27,0 % Chrom oder eine kohlenstoff- und chromreiche Eisen-Basislegierung mit weiteren Carbidbildnern mit wenigstens ca. 5,0 % Kohlenstoff, 2,0 % Mangan, 1,5 % Silizium, 22,0 % Chrom, 7,2 % Niob (Nb) und 0,5 % Vanadium (V) sein.

Der Grundwerkstoff des Hartguß-Walzenmantels kann vorteilhaft eine bainitische Gußeisenlegierung mit 2,8 bis 3,5 % Kohlenstoff, 2,0 bis 2,6 % Silizium, 0,2 bis 0,5 % Mangan, 1,5 bis 4,5 % Nickel und 0,5 bis 0,8 % Molybdän sein.

## Patentansprüche

1. Gutbettwalzenmühle zur Zerkleinerung von sprödem Mahlgut, mit zwei gegensinnig umlaufend angetriebenen, mit hohem Druck gegeneinander gepreßten Mahlwalzen (1,2), die je einen Walzengrundkörper (5) enthalten, auf dem ein Oberflächenprofilierungen (8, 9) aufweisender Walzenmantel (6, 7) aus verschleißfestem Hartguß vorgesehen ist,
dadurch gekennzeichnet,
daß auf die Oberfläche des Hartguß-Walzenmantels (6, 7) Profilierungen in Form von Schweißraupen (8, 9) aus verschleißfestem Auftragsschweißwerkstoff aufgebracht sind.

2. Gutbettwalzenmühle nach Anspruch 1, dadurch gekennzeichnet, daß die Profilierungs-Schweißraupen (8, 9) eine Breite (a) von ca. 10 bis 20 mm, vorzugsweise etwa im Bereich von ca. 15 mm, und eine Höhe von etwa 2 bis 5 mm, vorzugsweise etwa im Bereich von ca. 3 mm besitzen.

3. Gutbettwalzenmühle nach Anspruch 1, dadurch gekennzeichnet, daß die Profilierungs-Schweißraupen (8, 9) mit einem lichten Abstand (b) von wenigstens etwa 10 mm auf der Oberfläche des Walzenmantels (6, 7) vorgesehen sind.

4. Gutbettwalzenmühle nach Anspruch 2, dadurch gekennzeichnet, daß die Profilierungs-Schweißraupen (8, 9) auf der Oberfläche des Walzenmantels (6, 7) mit einem lichten Abstand (b) aufgeschweißt sind, der etwa der Breite dieser Schweißraupen entspricht.

5. Gutbettwalzenmühle nach Anspruch 1, dadurch gekennzeichnet, daß die Profilierungs-Schweißraupen (8) in Form eines Rautenmusters auf der Oberfläche des Walzenmantels (6, 7) aufgebracht sind.

6. Gutbettwalzenmühle nach Anspruch 1, dadurch gekennzeichnet, daß die Profilierungs-Schweißraupen (9) in Form eines Chevron-Musters auf der Oberfläche des Walzenmantels (6, 7) aufgebracht sind.

7. Gutbettwalzenmühle nach Anspruch 1, dadurch gekennzeichnet, daß die Profilierungs-Schweißraupen auf den Hartguß-Walzenmantel (6) einer Verbundguß-Vollwalze (1) aufgeschweißt sind.

8. Gutbettwalzenmühle nach Anspruch 1, dadurch gekennzeichnet, daß die Profilierungs-Schweißraupen auf einen als Verbundgußbandage hergestellten Hartguß-Walzenmantel aufgeschweißt sind.

9. Gutbettwalzenmühle nach Anspruch 1, dadurch gekennzeichnet, daß die Profilierungs-Schweißraupen (8, 9) auf einen aus einzelnen Segmenten (7a) zusammengesetzten Hartguß-Walzenmantel (7) aufgeschweißt sind, wobei die Segmente auf dem Walzengrundkörper (5) lösbar und auswechselbar befestigt sind.

10. Gutbettwalzenmühle nach Anspruch 1, dadurch gekennzeichnet, daß der Auftragsschweißwerkstoff der Profilierungs-Schweißraupen (8, 9) eine Schweißlegierung mit wenigstens ca. 5,0 % Kohlenstoff, 3,0 % Mangan, 1,8 % Silizium und 27,0 % Chrom oder mit wenigstens ca. 5,0 % Kohlenstoff, 2,0 % Mangan, 1,5 % Silizium, 22,0 % Chrom, 7,2 % Niob und 0,5 % Vanadium ist.

11. Gutbettwalzenmühle nach Anspruch 10, dadurch gekennzeichnet, daß der Grundwerkstoff des Hartguß-Walzenmantels (6, 7) eine Legierung mit wenigstens ca. 2,6 bis 3,2 % Kohlenstoff, 1,8 bis 2,0 % Silizium, 0,4 bis 0,6 % Mangan, 5,0 bis 6,5 % Nickel und 8,0 bis 9,0 % Chrom oder mit wenigstens ca. 2,5 bis 3,2 % Kohlenstoff, 0,5 bis 1,2 % Silizium, 0,6 bis 1,4 % Mangan, 1,0 bis 1,5 % Nickel, 16,0 bis 20,0 % Chrom und 2,5 bis 3,0 % Molybdän ist.

12. Gutbettwalzenmühle nach Anspruch 1, dadurch gekennzeichnet, daß die Hartguß-Walzenmäntel (6, 7) von Profilierungs-Schweißraupen (8, 9) frei axiale Endabschnitte (6a, 7b) aufweisen.

13. Gutbettwalzenmühle nach Anspruch 1, dadurch gekennzeichnet, daß der Grundwerkstoff des Hartguß-Walzenmantels (6, 7) eine bainitische Gußeisenlegierung mit 2,8 bis 3,5 % Kohlenstoff, 2,0 bis 2,6 % Silizium, 0,2 bis 0,5 % Mangan, 1,5 bis 4,5 % Nickel und 0,5 bis 0,8 % Molybdän ist.

## Claims

1. Material bed roll mill for comminuting brittle material for grinding, with two grinding rolls (1, 2) which are driven so that they revolve in opposite directions and are pressed against one another with high pressure, each grinding roll containing a basic roll body (5) on which is provided a roll casing (6, 7) made from wear-resistant chilled cast iron having surface profilings (8, 9), characterised in that profilings in the form of weld beads (8, 9) of wear-resistant build-up welding material are applied to the surface of the chill cast roll casing (6, 7).

2. Material bed roll mill as claimed in Claim 1, characterised in that the profiling weld beads (8, 9) have a width (a) of approximately 10 to 20 mm, preferably approximately in the region of about 15 mm, and a height of approximately 2 to 5 mm, preferably approximately in the region of about 3 mm.

3. Material bed roll mill as claimed in Claim 1, characterised in that these profiling weld beads (8, 9) are provided with a clear spacing (b) of at least approximately 10 mm on the surface of the roll casing (6, 7).

4. Material bed roll mill as claimed in Claim 2, characterised in that the profiling weld beads (8, 9) are welded on the surface of the roll casing (6, 7) with a clear spacing (b) which corresponds approximately to the width of these weld beads.

5. Material bed roll mill as claimed in Claim 1, characterised in that the profiling weld beads (8) are applied in the form of a rhomboid pattern on the surface of the roll casing (6, 7).

6. Material bed roll mill as claimed in Claim 1, characterised in that the profiling weld beads (9) are applied in the form of a chevron pattern on the surface of the roll casing (6, 7).

7. Material bed roll mill as claimed in Claim 1, characterised in that the profiling weld beads are welded onto the chill cast roll casing (6) of a composite cast solid roll (1).

8. Material bed roll mill as claimed in Claim 1, characterised in that the profiling weld beads are welded on to a chill cast roll casing which is produced as a composite cast wrapping.

9. Material bed roll mill as claimed in Claim 1, characterised in that the profiling weld beads (8, 9) are welded on to a chill cast roll casing (7) composed of individual segments (7a), wherein the segments are releasably and replaceably fixed on the basic roll body (5).

10. Material bed roll mill as claimed in Claim 1, characterised in that the build-up welding material of the profiling weld beads (8, 9) is a welding alloy with at least approximately 5.0% carbon, 3.0% manganese, 1.8% silicon and 27.0% chromium or with at least approximately 5.0% carbon, 2.0% manganese, 1.5% silicon, 22.0% chromium, 7.2% niobium and 0.5% vanadium.

11. Material bed roll mill as claimed in Claim 10, characterised in that the base material of the chill cast roll casing (6, 7) is an alloy with at least approximately 2.6 to 3.2% carbon, 1.8 to 2.0% silicon, 0.4 to 0.6% manganese, 5.0 to 6.5% nickel, 8.0 to 9.0% chromium (Cr) or with at least approximately 2.5 to 3.2% carbon, 0.5 to 1.2% silicon, 0.6 to 1.4% manganese, 1.0 to 1.5% nickel, 16.0 to 20.0% chromium and 2.5 to 3% molybdenum (Mo).

12. Material bed roll mill as claimed in Claim 1, characterised in that the chill cast roll casings (6, 7) have axial end portions (6a, 7b) which are free of profiling weld beads (8, 9).

13. Material bed roll mill as claimed in Claim 1, characterised in that the base material of the chill cast roll casing (6, 7) is a bainitic cast iron alloy with 2.8% to 3.5% carbon, 2.0 to 2.6% silicon, 0.2 to 0.5% manganese, 1.5 to 4.5% nickel and 0.5 to 0.8% molybdenum.

## Revendications

1. Broyeur à cylindres d'un lit de matière, destiné à la fragmentation de matière friable, comprenant deux cylindres de broyage commandés (1, 2), tournant en sens inverses et serrés sous forte pression l'un contre l'autre, dont chacun comprend un corps de base (5) sur lequel est prévue une enveloppe (6, 7) en fonte trempée résistant à l'usure et comportant des profilages de surface (8, 9),
caractérisé
en ce que des profilages en forme de chenilles de soudure (8, 9) en matériau d'apport de soudure résistant à l'usure sont déposés à la surface de l'enveloppe en fonte trempée (6, 7) des cylindres.

2. Broyeur à cylindres d'un lit de matière selon la revendication 1, caractérisé en ce que les chenilles de soudure de profilage (8, 9) ont une largeur (a) d'environ 10 à 20 mm, de préférence de l'ordre d'environ 15 mm et une hauteur d'environ 2 à 5 mm, de préférence à peu près de l'ordre d'environ 3 mm.

3. Broyeur à cylindres d'un lit de matière selon la revendication 1, caractérisé en ce que les chenilles de soudure de profilage (8, 9) sont prévues avec une distance d'écartement (b) d'au moins environ 10 mm à la surface de l'enveloppe (6, 7) des cylindres.

4. Broyeur à cylindres d'un lit de matière selon la revendication 2, caractérisé en ce que les chenilles de soudure de profilage (8, 9) sont rapportées par soudage à la surface de l'enveloppe (6, 7) des cylindres avec une distance d'écartement (b) qui correspond à peu près à la largeur de ces chenilles de soudure.

5. Broyeur à cylindres d'un lit de matière selon la revendication 1, caractérisé en ce que les chenilles de soudure de profilage (8) sont déposées sous la forme d'un motif de losanges à la surface de l'enveloppe (6, 7) des cylindres.

6. broyeur à cylindres d'un lit de matière selon la revendication 1, caractérisé en ce que les chenilles de soudure de profilage (9) sont déposées sous la forme d'un motif de chevrons à la surface de l'enveloppe (6, 7) des cylindres.

7. Broyeur à cylindres d'un lit de matière selon la revendication 1, caractérisé en ce que les chenilles de soudure de profilage sont rapportées par soudage sur l'enveloppe en fonte trempée (6) d'un cylindre plein de coulée composite (1).

8. Broyeur à cylindres d'un lit de matière selon la revendication 1, caractérisé en ce que les chenilles de soudure de profilage sont rapportées par soudage sur l'enveloppe de cylindre en fonte trempée réalisée sous forme d'un bandage de coulée composite.

9. Broyeur à cylindres d'un lit de matière selon la revendication 1, caractérisé en ce que les chenilles de soudure de profilage (8, 9) sont rapportées par soudage sur une enveloppe de cylindre en fonte trempée (7) se composant de segments individuels (7a), les segments étant fixés de manière amovible et interchangeable au corps de base (5) du cylindre.

10. Broyeur à cylindres d'un lit de matière selon la revendication 1, caractérisé en ce que le matériau d'apport de soudage des chenilles de soudure de profilage (8, 9) est un alliage de soudure contenant au moins 5,0 % de carbone, 3,0 % de manganèse, 1,8 % de silicium et 27 % de chrome ou contenant au moins environ 5,0 % de carbone, 2,0 % de manganèse, 1,5 % de silicium, 22,0 % de chrome, 7,2 de niobium et 0,5 % de vanadium.

11. Broyeur à cylindres d'un lit de matière selon la revendication 10, caractérisé en ce que le matériau de base de l'enveloppe de cylindre en fonte trempée (6, 7) est un alliage contenant au moins environ 2,6 à 3,2 % de carbone, 1,8 à 2,0 % de silicium, 0,4 à 0,6 % de manganèse, 5,0 à 6,5 % de nickel et 8,0 à 9,0 % de chrome ou contenant au moins environ 2,5 à 3,2 % de carbone, 0,5 à 1,2 % de silicium, 0,6 à 1,4 % de manganèse, 1,0 à 1,5 % de nickel, 16,0 à 20,0 % de chrome et 2,5 à 3,0 % de molybdène.

12. Broyeur à cylindres d'un lit de matière selon la revendication 1, caractérisé en ce que les enveloppes (6, 7) en fonte trempée des cylindres comportent des parties d'extrémité axiale (6a, 7b) exemptes de chenilles de soudure de profilage (8, 9).

13. Broyeur à cylindres d'un lit de matière selon la revendication 1, caractérisé en ce que le matériau de base de l'enveloppe en fonte trempée (6, 7) des cylindres est un alliage de fonte de fer bainitique contenant 2,8 à 3,5 % de carbone , 2,0 à 2,6 % de silicium, 0,2 à 0,5 % de manganèse, 1,5 à 4,5 % de nickel et 0,5 à 0,8 % de molybdène.
